Europäisches Patentamt

European Patent Office

Office européen des brevets

(11) Publication number: **0 057 468**
A2

## (12) EUROPEAN PATENT APPLICATION

(21) Application number: 82100742.4

(22) Date of filing: 02.02.82

(51) Int. Cl.³: **B 01 D 53/06,** B 01 D 46/32

(30) Priority: 04.02.81 JP 14247/81

(43) Date of publication of application: 11.08.82
Bulletin 82/32

(84) Designated Contracting States: DE GB

(71) Applicant: Hitachi, Ltd., 5-1, Marunouchi 1-chome, Chiyoda-ku Tokyo 100 (JP)
Applicant: BABCOCK-HITACHI KABUSHIKI KAISHA, 6-2, 2-chome, Ohtemachi Chiyoda-ku, Tokyo (JP)

(72) Inventor: Arashi, Norio, 2-13, Nishinarusawacho-4-chome, Hitachi-shi (JP)
Inventor: Komuro, Takeo, 3812-12, Ogitsucho, Hitachi-shi (JP)

(74) Representative: Finck, Dieter et al, K.L. Schiff Dr. A. v. Funer Dipl.-Ing P. Strehl Dr. U. Schübel-Hopf Dipl.-Ing. D. Ebbinghaus Dr. Ing. D. Finck Patentanwälte Mariahilfplatz 2 & 3, D-8000 München 90 (DE)

(54) Louver construction for supporting a charge of particulate material.

(57) A louver construction arranged in a closed vessel formed with an inlet port and an outlet port for particulate material aligned in a vertical direction and an inlet port and an outlet port for gas having its components adsorbed on the particulate material aligned in a horizontal direction. In addition to a plurality of sets of main louver elements oriented in the direction of flow of the particulate material and spaced apart from one another a predetermined distance with the main louver elements of each set angling toward each other a predetermined amount with respect to the direction of flow of the gas, at least one other set of louver elements is arranged in such a manner that the louver elements angling a predetermined amount toward each other with respect to the direction of flow of the gas are each interposed between the main louver elements of the adjacent sets.

EP 0 057 468 A2

0057468

## LOUVER CONSTRUCTION FOR SUPPORTING A CHARGE

## OF PARTICULATE MATERIAL

### FIELD OF THE INVENTION

This invention relates to louver constructions for supporting a charge of particulate material, and more particularly it is concerned with a louver construction having particular utility in providing charged layers of an adsorbing agent for adsorbing sulfur dioxide gas contained in the waste gas of a boiler, etc.

### BRIEF DESCRIPTION OF THE DRAWINGS

Fig. 1 is a view in explanation of a construction of the prior art for supporting charged layers of particulate material using louvers as support members;

Fig. 2 is a view in explanation of the flow of particles in the charged layers taking place when a louver construction of the prior art is used;

Figs. 3 - 6 are views in explanation of the principles of the present invention, Fig. 3 showing the manner in which charge pressure acts on the sublouver, Fig. 4 showing a state of stresses of a charged layer in planes, Fig. 5 showing a state of stresses on the sublouver and Fig. 6 being a diagrammatic representation of the relation between sublouver angle and $P_T/P_F$;

Fig. 7 is a schematic view of the louver construction comprising one embodiment of the invention;

Fig. 8 is a schematic view of one form of louver arrangement of the louver construction shown in Fig. 7; and

Fig. 9 is a schematic view of another form of louver arrangement of the louver construction shown in Fig. 7.


DESCRIPTION OF THE PRIOR ART

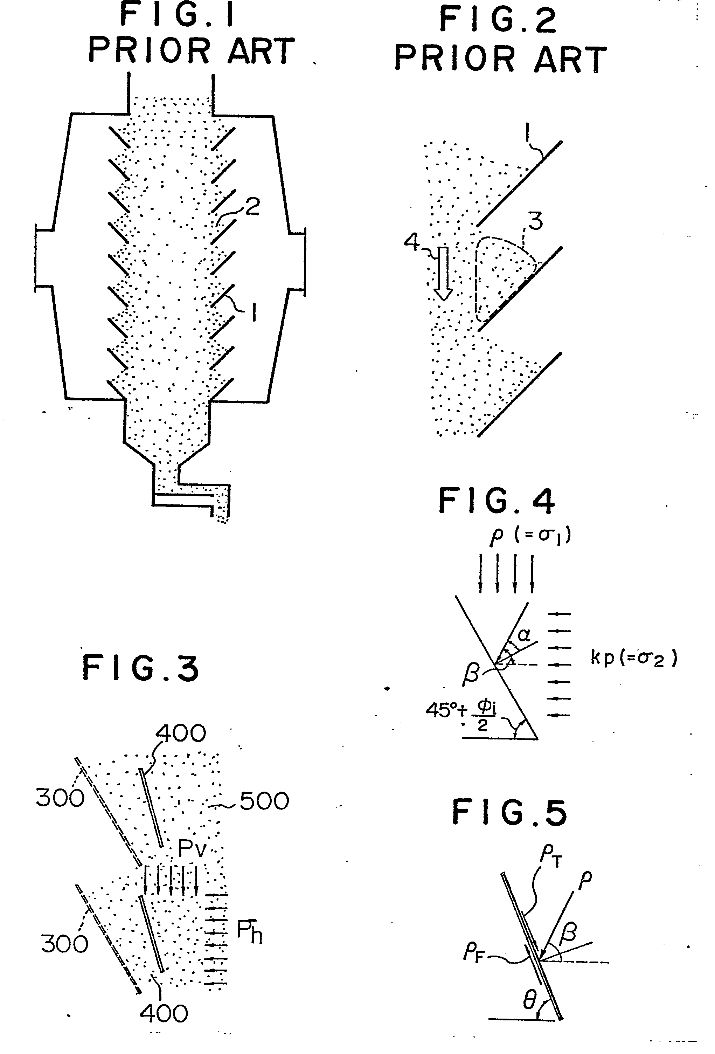

Heretofore, it has been usual practice to use a louver construction shown in Fig. 1 in which a multiplicity of louvers 1 in a tilting position are arranged vertically for providing charged layers of the movable type for supporting particulate material 2 thereon, when gas is introduced into the charged layers of the particulate material which may be a particulate adsorbing agent or catalyst to bring the particulate material into contact with certain components of the gas to cause them to react with each other or to collect such components. For this purpose, a louver construction as shown in Fig. 1 has usually been used in which a plurality of louvers 1 in a tilting position are arranged vertically for supporting particulate material 2 in movable charged layers.

The movable charged layers of the particulate material 2 supported on the louvers 1 of this construction have nonmovable masses 3 of the particulate material 2 formed on the lovers 1 as shown in Fig. 2. This phenomenon causes the disadvantage that when the gas treated by the particulate material 2 contains large volumes of dust as is the case with waste gas of a coal-burning boiler, for example, the dust is gradually accumulated in the nonmovable masses 3, resulting in a windage loss. Also, when the louver construction is used for causing adsorption of sulfur dioxide gas in the gas on activated carbon or other carbon base adsorbing agent, the adsorbing agent in the nonmovable masses 3 has sulfur dioxide gas adsorbed thereon in an amount exceeding the saturation point over a prolonged period of time, and the adsorbing agent in the nonmovable masses 3 has its surface wet with sulfuric acid produced from the adsorbed sulfur dioxide gas, causing corrosion to the louvers 1.

SUMMARY OF THE INVENTION

OBJECT OF THE INVENTION

An object of this invention is to provide a louver construction suitable for supporting particulate material in charged layers which is capable of avoiding corrosion by permitting the particulate material to move smoothly while being supported on the louvers.

Another object is to provide a louver construction suitable for supporting particulate material in charged layers which is capable of keeping nonmovable masses of the particulate material from being formed on the louvers, to thereby prevent a windage loss.

0057468

## STATEMENT OF THE INVENTION

This invention is based on the discovery made as a result of an experiment conducted by us by using colored particulate material that in the louver construction of the prior art shown in Fig. 1, the load applied in a horizontal direction by a particulate material group 4 constituting a main stream and the load applied by the nonmovable masses of the particulate material balance, so that the particles of the nonmovable masses 3 are kept from flowing into the particulate material group 4 constituting the main stream. This discovery has led to the concept of allowing the particles of the nonmovable masses 3 to flow into the main stream by causing the aforesaid loads to become unbalanced.

The outstanding characteristic of the invention is that sublouvers are arranged in the vicinity of the louvers of the louver construction of the prior art.

The invention enables the nonmovable masses of particulate material hitherto formed on the louvers to be eliminated in a louver construction of the movable charged layer type. Thus in the louver construction according to the invention, dust in the waste gas is prevented from being accumulated in the nonmovable masses of particulate material. When sulfur dioxide gas in the gas is adsorbed on an adsorbing agent, the adsorbing agent can be moved downwardly before the sulfur dioxide gas is adsorbed thereon in an amount exceeding the saturation point, thereby preventing corrosion of the louvers.

Additional and other objects, features and advantages of the invention will become apparent from the description set forth hereinafter when considered in conjunction with the accompanying drawings.

## DETAILED DESCRIPTION OF THE PREFERRED EMBODIMENTS

Prior to description of the preferred embodiment, the principles of the invention will be described in some detail.

Fig. 3 shows the principles of the invention in which 300 designates main louvers shown in broken lines, 400 designates sublouvers each located in the vicinity of one of the main louvers 3, and 500 designates particulate material supported thereon in movable charged layers.

Lacking a free surface, the particular material 500 on the sublouvers 400 has a downwardly oriented pressure $P_v$ act thereon and it moves downwardly by overcoming a horizontally directed pressure $P_h$ when it moves. When this is the case, whether or not smooth movement is obtained depends on the relation between a downwardly directed force exerted by a pressure P and the frictional force of the particulate material acting on the surfaces of the sublouvers 400.

When a vertical pressure P acting on the sublouvers 400 and a horizontal pressure kP are considered to produce a maximum main stress $\sigma_1$ and a minimum main

stress $\sigma_2$ respectively, as shown in Fig. 4, the direction of the stress acting on the sublouvers 400 can be given by the following equation:

$$\tan \alpha = \tau/\sigma \qquad \ldots \ldots \quad (1)$$

The following equations are obtained:

$$\sigma = \frac{\sigma_1 - \sigma_2}{2} \cos(90° + \phi_i) + \frac{\sigma_1 + \sigma_2}{2} \quad \ldots \quad (2)$$

$$\tau = \frac{\sigma_1 - \sigma_2}{2} \sin(90° + \phi_i) \qquad \ldots \ldots \quad (3)$$

$$k = (1 - \sin \phi_i)/(1 + \sin \phi_i) \qquad \ldots \ldots \quad (4)$$

In the equations set forth hereinabove, $\phi_i$ is the angle of friction between the particles of the particulate material. Since $\sigma_1 = P$ and $\sigma_2 = kP$, if one assumes that $\phi_i = 33$, $\tan \alpha = 0.445$ from equations (1) - (4), so that $\alpha = 24°$. If the angle formed between the tan $\alpha$ and the horizontal is denoted by $\beta$, then $\beta = 52.5°$.

If the angle of inclination of the sublouvers 400 with respect to the horizontal is denoted by $\theta''$ as shown in Fig. 5, then a downwardly directed force $\rho_\tau$ acting along the louver surface on the basis of $\rho$ and a frictional force $\rho_F$ acting on the louver surface are given by the following equations:

$$\rho_\tau = \rho \cdot \sin (\theta - 37.5°) \qquad \ldots\ldots \quad (5)$$

$$\rho_F = M \cdot \rho \cdot \cos (\theta - 37.5°) \qquad \ldots\ldots \quad (6)$$

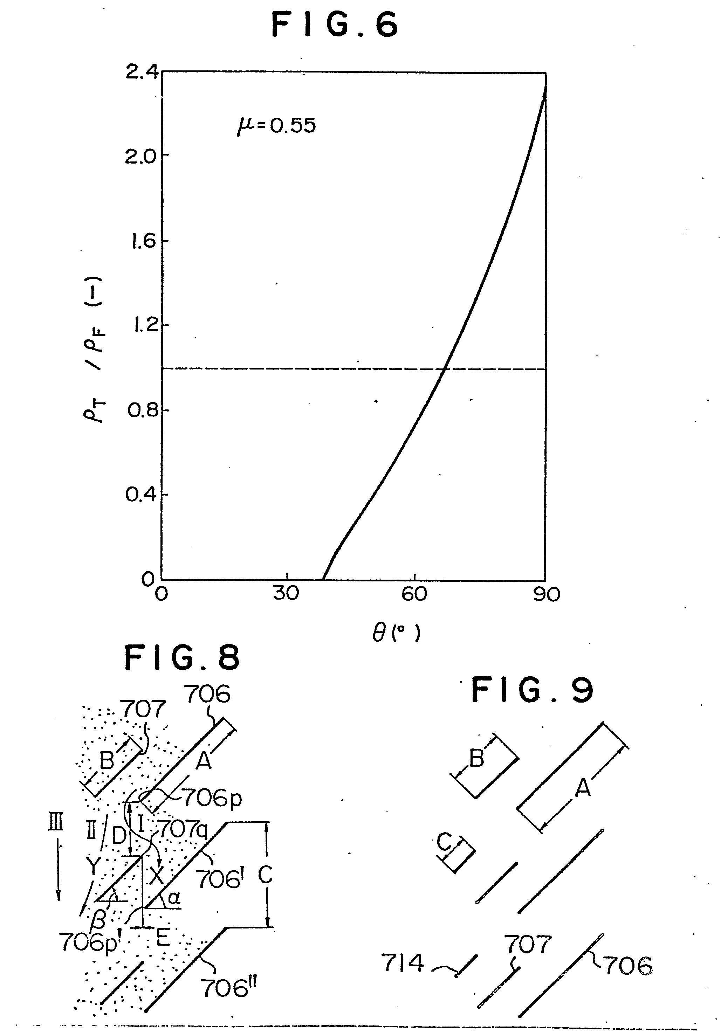

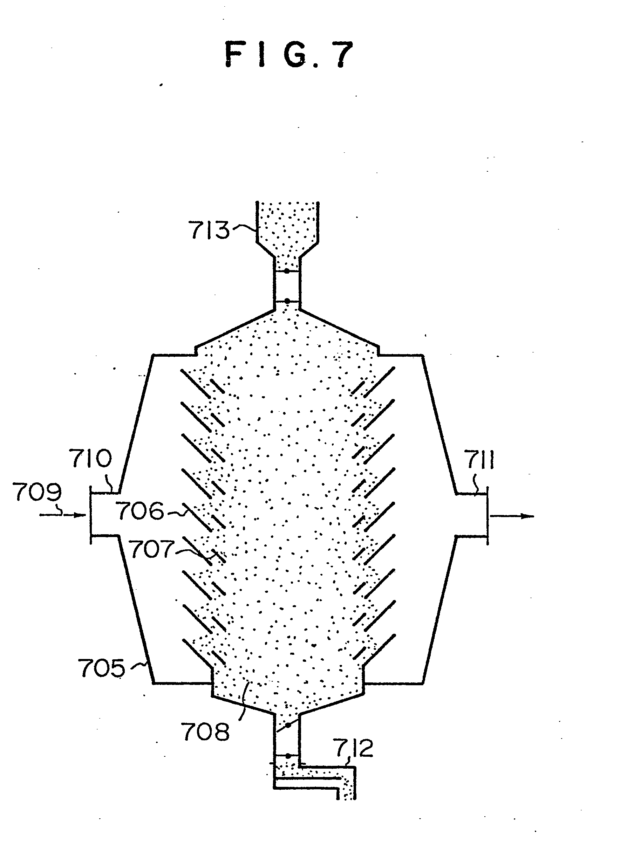

From equations (5) and (6), the relation between $\theta$ and $\rho_\tau/\rho_F$ can be obtained as shown in Fig. 6. For the particulate material on the sublouvers to flow downwardly, it is necessary that the relation $\rho_\tau/\rho_F > 1$ hold. It will be understood that in Fig. 6 the angle $\theta$ formed by the sublouver and the horizontal has only to be set at $\theta > 70°$ under the aforesaid conditions. It is more preferable that $\theta = 74°$.

A preferred embodiment of the invention will now be described by referring to Fig. 7 which shows a louver construction suitable for use in supporting the movable charged layers of an adsorbing agent for carrying out desulfurization of waste gas. An adsorption tower 705 has arranged therein a plurality of sets of louvers in a tilting position located vertically, each set including main louvers 706 and sublouvers 707 forming two vertical rows spaced apart from each other a suitable distance. An adsorbing agent 708 is charged between the two vertical rows of the main louver 706 and the sublouvers 707. Waste gas 709 as of a boiler, not shown, is introduced through a gas inlet port 710 into the adsorption tower 705 and flows through the clearance between the louvers of one row and the charged layers of the adsorbing agent before being discharged from the tower 705 through the clearance between the louvers of the other row and a gas outlet port 711. As the adsorbing agent flows through the adsorption tower 705 as described hereinabove, the sulfur dioxide gas contained in the waste gas is adsorbed and removed from the waste gas. With time, the adsorbing agent reaches the saturation point, so that a predetermined quantity of adsorbing agent is continuously withdrawn from the adsorption tower 705 through a remover 712 located at the bottom of the tower 705 for transfer to a regenerating device, not shown, from which it is returned to a hopper 713 at the top of the tower 705 through which it is supplied to the interior of the tower 705 in circulation.

The details of the louver construction will be described by referring to Fig. 8 in which the sublouver 707 is located relative to the main louver 706 in such a manner that it is interposed between the adjacent two main louvers 706 and 706' and an upstream end 707q thereof is located on a straight line connecting lower ends 706p and 706'p' of the main louvers 706 and 706' respectively or inside such straight line. Also, when the main louvers 706 and 706' form with the horizontal an angle $\alpha$, the sublouver 707 is preferably arranged in a manner to satisfy the following relation:

$$\alpha \leq \beta \qquad \dots \dots \quad (7)$$

in which α is the angle formed by the sublouver 707 and the horizontal. Stated differently, the sublouvers 707 are preferably located in such a manner that the direction of its inclination is the same as the direction of inclination of the main louvers 707 and the angle β is equal to or larger than the angle α.

The angle α is preferably set at a value higher than the angle of repose of the particulate material. Based on our experiences, the angle β is set at a value smaller than 90°. Thus equation (7) can be rewritten as follows:

$$30° < \alpha \leqq \beta < 90° \qquad \ldots\ldots \quad (7')$$

The dimensional relation between the main louvers 706 and the sublouvers 707 is as follows. The main louvers 706 and the sublouvers 707 have lengths which are such that the particulate material (adsorbing agent) applies no charge pressure to the main louver 706 positioned against the sublouver 707.

By arranging the sublouvers 707 relative to the main louvers 706, the sublouvers 707 is capable of bearing a portion of the load applied by the particulate material in a portion Y, so that no load is applied to a portion X above the main louvers 706 and smooth flow of the particulate material on the main louvers 706 can be obtained. In the embodiment shown and described hereinabove, the sublouvers 707 are smaller in dimension than the main louvers 706 (less then one-half) and substantially no nonmovable masses of particulate material are formed on the sublouvers 707. Thus the movement of the particulate material in the absorption tower follows paths I, II and III.

The adsorbing agent used in the embodiment shown and described hereinabove had an angle of repose of 30° with respect to the horizontal, so that the angles of inclination $\alpha$ and $\beta$ of the main louvers 706 and the sublouvers 707 were selected at 45° with respect to the horizontal. As aforesaid, the angles of inclination $\alpha$ and $\beta$ of the main louvers 706 and the sublouvers 707 need not coincide with each other and any value may be selected for them so long as it is larger than the angle of repose of the particulate material. The main louvers and the sublouvers were dimensioned such that a portion A of the main louvers 706, a portion B of the sublouvers 707, a gap C between the main louvers 706, a vertical distance between the lower end of the main louver 706 and the upper end of the sublouver 707 and a horizontal distance E between the end of the main louver 716 and the end of the sublouver 707 were 100 mm, 50 mm, 80 mm, 40 mm and between 0 and 10 mm, respectively. When a charge of carbon base adsorbing agent with a particle size of 5 - 10 mm in diameter was filled between the louvers of this construction and successively withdrawn through the bottom of the tower, smooth movement of the adsorbing agent was obtained with no nonmovable masses on the main louvers and substantially no nonmovable masses on the sublouvers.

Fig. 9 shows another embodiment of the invention which is distinct from the embodiment shown in Fig. 8 in that second sublouvers 714 smaller than the sublouvers 707 in dimension are arranged inwardly of the latter. In this embodiment, the second sublouvers 714 are related to the sublouvers 707 in the same manner as the sublouvers 707 are related as described hereinabove to the main louvers 706. The louvers had the dimensions such that a portion A of the main louvers 706, a portion B of the sublouvers 707 and a portion C of the second sublouvers 714 were 100 mm, 40 mm and 15 mm respectively. The sublouvers 707 and the second sublouvers 714 were arranged such that their lower ends were each located on a perpendicular to the lower ends of the main louvers 706. It is to be understood that the lower ends of the sublouvers and the second sublouvers may be located inwardly of the perpendicular to the lower ends of the main louvers, as described hereinabove. A charge of a mixture of flyash in the waste gas of a coal-burning boiler with the adsorbing agent of the particle size described by referring to the embodiment shown and described by referring to Fig. 8 was filled between the louvers of the aforesaid construction and allowed to move. Despite the fact that the fractional force acting between the particles has increased as a result of incorporation of the flyash in the adsorbing agent, no nonmvable masses were formed on the louvers.

WHAT IS CLAIMED IS:

1. A louver construction arranged in a vessel charged with particulate material for supporting charged layers of the particulate material, comprising a plurality of sets of main louver elements oriented in the direction of flow of the particulate material and spaced apart from one another a predetermined distance with the main louver elements of each set being juxtaposed against and angling toward each other a predetermined amount with respect to the direction of flow of the particulate material, wherein the improvements comprises:

at least one other set of louver elements arranged between the main louver elements of the adjacent sets, said louver elements of said at least one other set being juxtaposed against and angling toward each other a predetermined amount with respect to the direction of flow of the particulate material.

2. A louver construction as claimed in claim 1, wherein the louver elements of said at least one other set are located in such a manner that each said louver element has its upper end located on a straight line connecting lower ends of the main louver elements of the adjacent sets or said straight line exits in a region in which it does not cross the main louver elements of the adjacent sets.

3. A louver construction as claimed in claim 1 or 2, wherein the degree at which said louver elements of said at least one other set angle with respect to the direction of flow of the particulate material is equal to or smaller than the angle at which said main louver elements of the adjacent sets angle with respect to the direction of flow of the particulate material.

4.      A louver construction as claimed in any one of claims 1 - 3, wherein said louver elements of said at least one other set each have a length large enough not to allow the charged layers of the particulate material to apply pressure to said main louver elements of each set.

5.      A louver construction arranged in a closed vessel formed with an inlet port and an outlet port for particulate material aligned in a vertical direction and an inlet port and an outlet port for gas having its components adsorbed on the particulate material aligned in a horizontal direction, comprising a plurality of sets of main louver elements oriented in the direction of flow of the particulate material and spaced apart from one another a predetermined distance with the main louver elements of each set being juxtaposed against and angling toward each other a predetermined amount with respect to the direction of flow of the gas, wherein the improvement comprises:

at least one other set of louver elements arranged between the main louver elements of the adjacent sets, said louver elements of said another set being juxtaposed against and angling toward each other a predetermined amount with respect to the direction of flow of said gas.

6. A louver construction as claimed in claim 5, wherein said louver elements of said at least one other set are arranged in such a manner that an end of each said louver element located on the upstream side of the direction of flow of the particulate material is located on two parallel lines obtained by connecting ends of the main louver elements of the adjacent sets located on the downstream side of the direction of flow of the particulate material or in a region defined between said two parallel straight lines.

7. A louver construction as claimed in claim 5 or 6, wherein the degree at which said louver elements of said set angle with respect to the direction of flow of the gas is equal to or larger than the degree at which the main louver elements of the adjacent sets angle with respect to the direction of flow of the gas.

8. A louver construction as claimed in any one of claims 5 - 7, wherein said louver elements of said set each have a length large enough not to allow charged layers of the particulate material to apply pressure to the main louver elements of the adjacent sets.

FIG.1
PRIOR ART

FIG.2
PRIOR ART

0057468

FIG.3

FIG.4

$\rho\ (=\sigma_1)$

$kp(=\sigma_2)$

$45° + \dfrac{\Phi i}{2}$

FIG.5

# FIG.6

# FIG.8

# FIG.9

# F I G. 7